# EUROPÄISCHE PATENTSCHRIFT

(11) **EP 0 677 690 B1**
(45) Veröffentlichungstag und Bekanntmachung des Hinweises auf die Patenterteilung: **25.02.1998**
(21) Anmeldenummer: 95105328.9
(22) Anmeldetag: 08.04.1995
(51) Int. Cl.: F16L 13/10

(54) **Muffenspiegeldichtung**
Socket butt sealing
Etanchement de l'embout d'un manchon

(30) Priorität: 17.04.1994 DE 4412956
(43) Veröffentlichungstag der Anmeldung: 18.10.1995
(73) Patentinhaber: KARL-HEINZ SANDER GmbH & CO KG, D-32756 Detmold (DE)
(72) Erfinder: Lammering, Thomas, Dipl.-Ing., D-33335 Gütersloh (DE)
(74) Vertreter: Eggert, Hans-Gunther, Dr.

(56) Entgegenhaltungen:
- DE-A- 1 525 952
- DE-U- 1 932 446
- US-A- 1 925 538

## Beschreibung

Die Erfindung bezieht sich auf eine Muffenspiegeldichtung gemäß dem Oberbegriff des Anspruchs 1.

Muffenspiegeldichtungen werden seit einiger Zeit für MuffenRohrverbindungen, insbesondere bei Betonrohren angewendet, wobei es bekannt ist, außer einem Dichtungsring zwischen der inneren Umfangsfläche der Muffe und der äußeren Umfangsfläche des in die Muffe hineinragenden Rohrendes einen weiteren Dichtungsring im sogenannten Stoßspalt zwischen den einander benachbarten Stirnflächen von Rohrende und Muffe vorzusehen. Dieser weitere Dichtungsring, der im allgemeinen als kreisringförmige bzw. dem Rohrquerschnitt angepaßte Ringscheibe ausgebildet ist, wird meist mittels einer geeigneten Vergußmasse wie einem Spezialkleber oder dergleichen auf der dem Rohrende benachbarten Stirnfläche der Muffe aufgebracht bzw. befestigt. Dabei ist es auch bekannt, den weiteren Dichtungsring zwecks besserer Verankerung und Fixierung mit einem sich in axialer Richtung erstreckenden ringförmigen Steg auszubilden und mit diesem in der Vergußmasse einzubetten. Beim Zusammenfügen der Rohre drückt dann das Ende des einen Rohres gegen den auf dem Muffenspiegel des anderen Rohres befestigten weiteren Dichtungsring und preßt diesen mehr oder weniger stark zusammen, so daß zwischen den Rohren die beabsichtigte Dichtungswirkung erzielt wird.

Die Erzielung einer einwandfreien Dichtungswirkung bei solchen Muffenspiegeldichtungen setzt voraus, daß außer einer sach- und fachgerechten Handhabung beim Umgang mit und Aufbringen der Dichtung beim Zusammenfügen der Rohre größte Sauberkeit gewährleistet ist. Diese ist in engen und schmutzigen Baugruben, Gräben oder dergleichen meist nicht gegeben, weshalb die gewünschte und erforderliche Dichtungswirkung zwischen den Bauteilen häufig nicht erreicht wird. Da die Rohrleitungen heute meist mit Hochdruckspülungen gereinigt werden, kommt als Weiteres hinzu, daß sich ein nicht einwandfrei angepreßter Dichtungsring von der Verguß- bzw. Klebemasse, gegebenenfalls sogar mit dieser zusammen, vom Rohrteil ablösen und in das Rohrinnere hineingelangen und dort erhebliche unerwünschte und nicht hinnehmbare hydraulische Störungen verursachen kann, was zu erheblichen kostenintensiven und technisch wie zeitmäßig aufwendigen Sanierungs- und Nachbesserungs- bzw. Nachdichtungs-arbeiten führen kann.

Aufgabe der vorliegenden Erfindung ist es, eine Muffenspiegeldichtung zu schaffen, die bei einfacher Anwendung eine erhöhte Sicherheit der Abdichtung auch bei höchsten Beanspruchungen gewährleistet.

Diese Aufgabe wird erfindungsgemäß gelöst mit einer Muffenspiegeldichtung gemäß dem Kennzeichen des Anspruchs 1. Zweckmäßige weitere Ausgestaltungen der Erfindung sind in den Unteransprüchen beschrieben.

Mit dem Befüllen des hinter dem Dichtungskörper der weiteren Dichtung befindlichen Schlauchhohlraums sowie des sich zwischen den beiden Dichtungen befindenden Stoßspaltes mit Dichtungsmaterial unter Druck wird eine wesentliche Verbesserung der Dichtungswirkung erzielt, die auch höchsten Ansprüchen gerecht wird, wie dies heute im Interesse des Umweltschutzes unbedingt erforderlich ist.

Die Erfindung ist in der Zeichnung in einem Ausführungsbeispiel dargestellt und wird anhand dieses im folgenden beschrieben. Es zeigen:

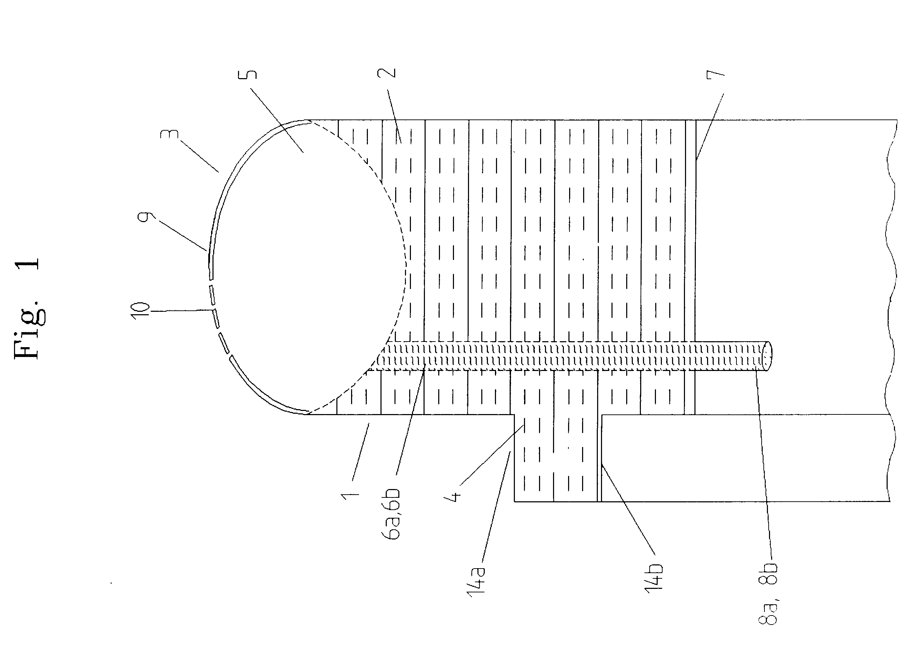

- Figur 1 in einem Ausschnitt und im Schnitt den weiteren Dichtungsring gemäß der Erfindung,

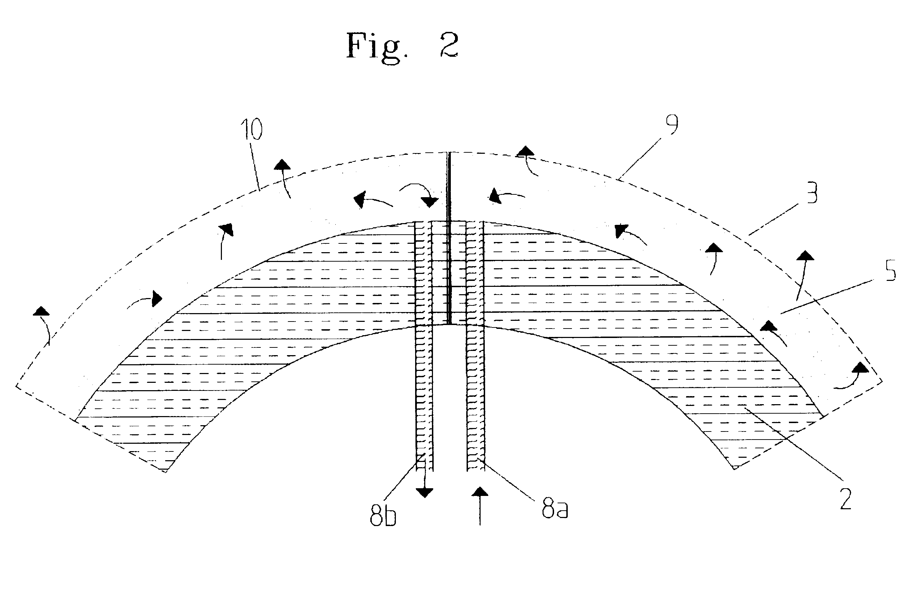

- Figur 2 dazu eine Seitenansicht,
- Figur 3 in etwas kleinerem Maßstab die Anordnung des weiteren Dichtungsrings der Figuren 1 und 2 am Spiegel einer Muffe, und
- Figur 4 in einem Ausschnitt und im Schnitt die komplette Muffenspiegeldichtung in einbaufertigem Zustand.

Der als im wesentlichen ebene ringzylindrische Scheibe ausgebildete Dichtungskörper 2 der weiteren Dichtung 1 aus Gummi oder einem anderen für den jeweils vorgesehenen Anwendungsfall geeigneten resistenten und mehr oder weniger stark dauerelastischem Material weist an seinem äußeren Umfang den schlauchförmig ausgebildeten Teil 3 und an seiner einen Flachseite den ringzylindrischen Steg 4 auf. Der Innenraum 5 des schlauchförmigen Teils 3 steht über die zu beiden Seiten der Trennwand 28 ausgebildeten Öffnungen 6a, 6b mit dem inneren Umfang 7 des Dichtungskörpers 2 in Verbindung. In diesen Öffnungen 6a, 6b sind die Zuführleitung 8a und die Entlüftungsleitung 8b, die aus demselben Material wie die Dichtungen hergestellt sein können, angeordnet, die mit nicht gezeigten Steuerventilen versehen sein und zu einer ebenfalls nicht gezeigten Druckquelle, beispielsweise einer Druckpumpe, einem Verpreßgerät oder dergleichen führen sollen. Die Leitungen 8, bei denen es sich zweckmäßig um flexible Schläuche handelt, sind zweckmäßig bis zum Hohlraum 5 geführt und in geeigneter Weise, beispielsweise mittels Vulkanisation, in den Öffnungen 6a, 6b befestigt und können selbstverständlich auch anders als gezeigt in den Öffnungen 6a und 6b angeordnet sein, beispielsweise nur vom inneren Umfang des Dichtungskörpers 2 aus in mehr oder weniger großem Maße ein Stück weit in die Öffnungen 6a, 6b hineingesteckt sein. Der schlauchförmige Teil 3 ist auf seiner Außenhaut 9 mit einer mehr oder weniger großen Anzahl von über die Breite und über den Umfang des Dichtungskörpers 2 vorzugsweise gleichmäßig verteilt angeordneten kleinen Öffnungen 10 versehen.

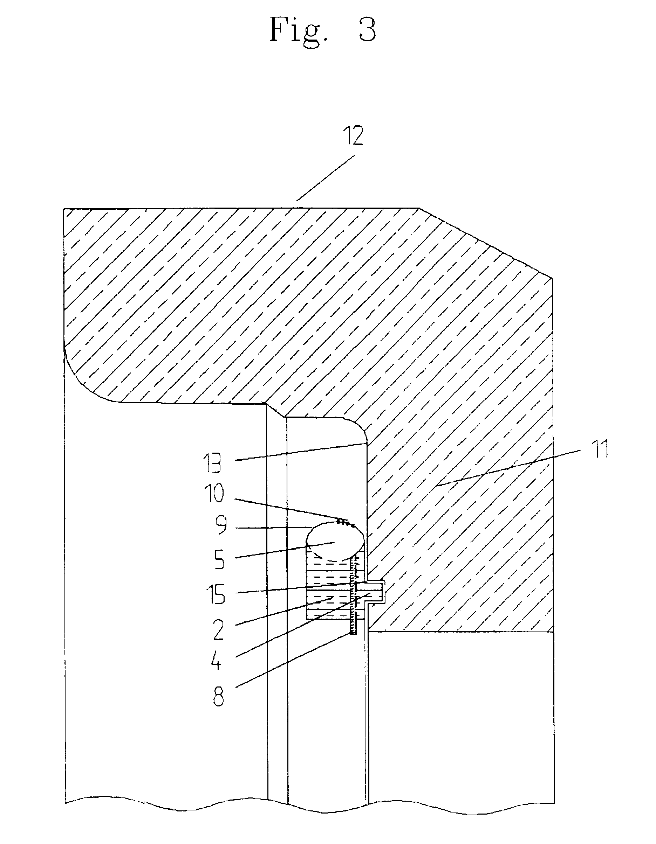

Figur 3 zeigt in schematischer Darstellung die Anbringung der Dichtung 1 im Spiegel 11 der Rohrmuffe 12. Selbstverständlich erfolgt die Anbringung so, daß die Dichtung 1 mit ihrem Dichtungskörper 2 satt an der Fläche 13 des Spiegels 11 anliegt und ebenso versteht es sich, daß der ringzylindrische Steg 4 sich mit seinen seitlichen Flanken 14a, 14b möglichst genau passend in die ringförmige Nut des Spiegels 11 einfügt, um eine radiale Verschiebung der Dichtung 1 gegenüber dem Muffenspiegel 11 möglichst auszuschließen. Die Tiefe der Nut 15 wird zweckmäßig so ausgeführt, daß das satte Anliegen der Dichtung 1 an der Spiegelfläche 13 nicht behindert wird.

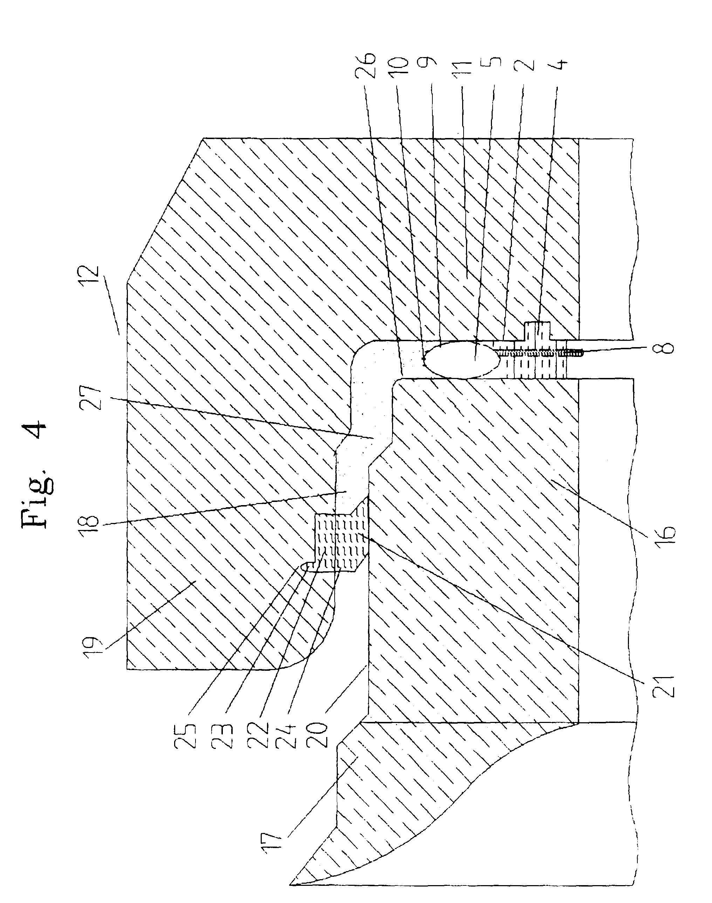

Beim Ausführungsbeispiel für den Einbauzustand der Muffenspiegeldichtung gemäß Figur 4 ist das Ende 16 des Rohres 17 in die Rohrmuffe 12 gesteckt, wobei zwischen der inneren Fläche 18 des glockenförmigen Teils 19 der Rohrmuffe 12 und der äußeren Fläche 20 des Rohrendes 16 der Dichtungsring 21 angeordnet und mit seinem mit dem Steg 23 versehenen äußeren Bereich 22 in die dazu passend ausgebildete Nut 24 mit stegartiger Vertiefung 25 des Muffenteiles 19 eingebracht ist. Bei dem Dichtungsring 21 kann es sich um eine handelsübliche Rollring- oder Gleitringdichtung handeln. Zwischen der stirnseitigen Fläche 26 des Rohrendes 16 befindet sich die in zuvor beschriebener Weise auf dem Muffenspiegel 11 angeordnete Dichtung 1, die abweichend von der Zeichnung mit ihrem Steg 4 selbstverständlich auch in einer entsprechenden ringförmigen Nut im stirnseitigen Ende des Rohrendes verankert sein könnte.

Zwecks Herstellung des fertigen Einbauzustandes wird wie folgt vorgegangen:

Nach dem Anbringen der Dichtungsringe 1 und 21 wird das Rohr 17 mit seinem Ende 16 in die Rohrmuffe 12 eingeschoben und gegen die Dichtung 1 gepreßt, so daß zwischen dem Rohrende 16 und dem Dichtungskörper 2 einerseits und dem Dichtungskörper 2 und dem Spiegel 11 der Rohrmuffe 12 andererseits eine satte und dichte Anlage unter Erzielung eines ausreichend hohen Anpreßdruckes erreicht wird. Über die eine der beiden Leitungen 8a, 8b wird von einer nicht dargestellten Druckquelle aus Dichtungsmaterial in den Innenraum 5 des schlauchförmigen Teils 3 der Dichtung 1 solange eingepreßt, bis dieser völlig gefüllt ist und über die Öffnungen 10 das Dichtungsmaterial auch in den von der Muffe 12 und dem Rohrende 16 sowie den Dichtungen 1 und 21 begrenzten Hohlraum 27 gelangt und diese schließlich unter Druck völlig ausfüllt. Über die andere der beiden Leitungen 8a, 8b kann während des Einpressens des Dichtungsmaterials zunächst die in den Hohlräumen 5 und 27 eingeschlossene Luft und nach völliger Befüllung der beiden Hohlräume auch überschüssiges Dichtungsmaterial austreten, wodurch angezeigt wird, daß der Füllvorgang beendet ist. Über nicht gezeigte Steuerventile in den Leitungen 8a, 8b kann der Füllvorgang dabei in der gewünschten Weise beeinflußt und der gewünschte Druck, mit dem das Dichtungsmaterial in die Hohlräume 5 und 27 eingepreßt werden soll, eingestellt werden.

Nach erfolgter Befüllung der Hohlräume 5 und 27 mit Dichtungsmaterial werden die Druckquelle sowie der Teil der Leitungen 8a, 8b, der sich im Inneren der Rohrleitung störend auswirken könnte, entfernt, womit der endgültige Einbauzustand hergestellt ist.

Die mit der erfindungsgemäßen Muffenspiegeldichtung erzielten Vorteile bestehen zum einen darin, daß ein Aufkleben der Dichtung 1 nicht mehr erforderlich ist, da diese mit einem Steg versehen und unmittelbar in der Rohrmuffe oder auch im Rohrende 16 fest verankert ist, so daß die Dichtung 1 ihren Sitz auch beim Durchspülen der Rohrleitung unter hohem Druck nicht verändern kann. Durch das Verpressen der Dichtung mit dem hinter ihr befindlichen Stoßspalthohlraum mit einem geeigneten Dichtungsmaterial wie Kunstharz oder dergleichen wird ein absolut dichter Stoßspalt 27 erzielt, wodurch zusätzlich zu der vorgesehenen umfänglichen normalen Rohrdichtung 21 (Rollring- oder Gleitringdichtung) eine weitere Dichtung geschaffen ist, welche auch erhöhten Dichtigkeitsanforderungen im Umwelt- und Gewässerschutz gerecht wird.

Bei nichtbegehbaren Rohrquerschnitten erfolgt das Einpressen des Dichtungsmaterials in die Hohlräume 5 und 27 mittels ferngesteuerter Verpreßgeräte oder dergleichen, wogegen in begehbaren Rohrquerschnitten die Dichtung bereits beim Verlegen der Rohre von innen her verpreßt werden kann.

## Patentansprüche

1. Muffenspiegeldichtung für Muffen-Rohrverbindungen, insbesondere von Betonrohren, bei der zwischen den einander benachbarten Umfangsflächen (20; 18) des in die Muffe (12) hineinragenden Rohrendes (16) und der dieses umgebenden Muffe (12) ein Dichtungsring (21) und zwischen den einander benachbarten Stirnflächen (26; 13) von Rohrende (16) und Muffenspiegel (11) ein weiterer Dichtungsring (1) angeordnet ist, dadurch gekennzeichnet, daß der zwischen den Stirnflächen (26; 13) des Rohrendes (16) und der Muffe (12) angeordnete weitere Dichtungsring (1) längs seines äußeren Umfangs mit einem schlauchförmigen Hohlraum (5) versehen ist, der an seiner Außenhaut (9) mit Öffnungen (10) für den Durchtritt von Dichtungsmaterial versehen ist und mit dem inneren Umfang (7) des Dichtungshörpers (2) über durch den Dichtungshörper (2) hindurchgehende Öffnungen (6a; 6b) in Verbindung steht für den Anschluß an eine Zuführleitung (8a) für fließfähiges dauerelastisches Dichtungsmaterial wie Kunstharz oder dergleichen und an eine Entlüftungsleitung (8b).

2. Muffenspiegeldichtung nach Anspruch 1, dadurch gekennzeichnet, daß die Öffnung (6a) für den Anschluß an die Zuführleitung (8a) an der einen Seite und die Öffnung (6b) für den Anschluß an die Entlüftungsleitung (8b) an der anderen Seite einer im schlauchförmigen Hohlraum (5) ausgebildeten radialen Trennwand (28) angeordnet sind.

3. Muffenspiegeldichtung nach Anspruch 1 oder 2, dadurch gekennzeichnet, daß an die Öffnung (6a) für die Zuführleitung (8a) ein an eine Druckquelle, beispielsweise an eine Druckpumpe, anschließbarer und mit einem druck- und/oder mengensteuerbaren Ventil versehener Zuführschlauch und an die Öffnung (6b) für die Entlüftungsleitung (8b) ein mit einem steuerbaren Entlüftungsventil versehener Abführschlauch angeschlossen sind.

4. Muffenspiegeldichtung nach einem der Ansprüche 1 bis 3, dadurch gekennzeichnet, daß der Gesamtquerschnitt der am äußeren Umfang des schlauchförmigen Hohlraums (5) vorgesehenen Öffnungen (10) kleiner ist als der Querschnitt der Öffnung für den Anschluß der Zuführleitung (8a) am inneren Umfang (7) des weiteren Dichtungsrings (1).

5. Muffenspiegeldichtung nach einem der Ansprüche 1 bis 4, dadurch gekennzeichnet, daß die Öffnungen (10) am äußeren Umfang des schlauchförmigen Hohlraums (5) sich in Abhängigkeit von einem vorgegebenen Fülldruck des Schlauchhohlraums öffnen.

6. Muffenspiegeldichtung nach einem der Ansprüche 1 bis 5, dadurch gekennzeichnet, daß zumindest der zwischen den Stirnflächen (26; 13) von Rohrende (16) und Muffe (12) angeordnete weitere Dichtungsring (1) mit einem ringförmig ausgebildeten und in eine dazu passend ausgebildete ringförmige Vertiefung (15) der benachbarten Stirnfläche eingreifenden Steg (4) ausgebildet ist.

## Claims

1. A socket butt seal for spigot joints, in particular of concrete pipes, in which a sealing ring (21) is arranged between the adjacent peripheral surfaces (20; 18) of the pipe end (16) which projects into the socket (12) and the socket (12) surrounding it and an additional sealing ring (1) is arranged between the adjacent end faces (26; 13) of the pipe end (16) and socket part (11), characterised in that the additional sealing ring (1) arranged between the end faces (26; 13) of the pipe end (16) and the socket (12) is provided along its outer periphery with a tubular cavity (5) which is provided on its outer skin (9) with openings (10) for sealing material to pass through and is connected to the inner periphery (7) of the sealing element (2) by means of openings (6a; 6b) passing through the sealing element (2) for connection to a feed line (8a) for flowable, permanently elastic sealing material such as synthetic resin or the like and to a vent line (8b).

2. A socket butt seal according to Claim 1, characterised in that the opening (6a) for connection to the feed line (8a) is located on one side and the opening (6b) for connection to the vent line (8b) on the other side of a radial partition (28) formed in the tubular cavity (5).

3. A socket butt seal according to Claim 1 or 2, characterised in that a feed pipe which can be connected to a pressure source, for example a pressure pump, and is provided with a pressure-controllable or flow-controllable valve is connected to the opening (6a) for the feed line (8a) and a removal tube provided with a controllable venting valve is connected to the opening (6b) for the vent line (8b).

4. A socket butt seal according to one of Claims 1 to 3, characterised in that the total cross-section of the openings (10) provided on the outer periphery of the tubular cavity (5) is smaller than the cross-section of the opening for connecting the feed line (8a) on the inner periphery (7) of the additional sealing ring (1).

5. A socket butt seal according to one of Claims 1 to 4, characterised in that the openings (10) on the outer periphery of the tubular cavity (5) open depending on a predetermined filling pressure of the tube cavity.

6. A socket butt seal according to one of Claims 1 to 5, characterised in that at least the additional sealing ring (1) arranged between the end faces (26; 13) of the pipe end (16) and socket (12) is designed with an annular bar (4) which engages in a matching annular recess (15) in the adjacent end face.

## Revendications

1. Joint d'étanchéité pour des liaisons tubulaires à manchons, en particulier de tuyaux de béton, dans lequel on dispose, entre les faces périphériques (20; 18), voisines l'une de l'autre, de l'extrémité du tube (16), qui pénètre dans le manchon (12), et du manchon (12), qui entoure cette extrémité, une bague d'étanchéité (21) et entre les faces frontales (26; 13), voisines l'une de l'autre, de l'extrémité (16) du tube et de la surface lisse (11) du manchon, une autre bague d'étanchéité (1), caractérisé en ce que l'autre bague d'étanchéité (1), disposée entre les faces frontales (26; 13) de l'extrémité du tube (16) et du manchon (12), est pourvue le long de son pourtour extérieur d'une cavité (5) en forme de tuyau, qui est pourvue sur son bord extérieur (9) d'orifices (10) pour le passage d'un matériau d'étanchéité, et est en liaison avec le pourtour intérieur (7) du corps d'étanchéité (2) au moyen d'orifices (6a, 6b) qui passent à travers le corps (2), liaison qui sert au raccordement à une conduite d'amenée (8a) d'un matériau d'étanchéité à écoulement libre, qui reste élastique en permanence, tel qu'une résine synthétique ou un matériau analogue, et/au raccordement à une conduite de dégazage (8b).

2. Joint d'étanchéité à manchon, selon la revendication 1, caractérisé en ce que l'on constitue l'orifice (6a), pour le raccordement à la conduite d'amenée, (8a) sur l'un des côtés, et l'orifice (6b), pour le raccordement à la conduite de dégazage (8b), sur l'autre côté d'une cloison de séparation radiale (28), constituée dans la cavité (5) en forme de tuyau.

3. Joint d'étanchéité à manchon, selon la revendication 1 ou 2, caractérisé en ce que l'on raccorde à l'orifice (6a) pour la conduite d'amenée (8a) un tuyau d'alimentation, qui peut être raccordé à une source de pression, par exemple à une pompe refoulante, et qui est pourvu d'une vanne qui peut être commandée par la pression et/ou le débit, et en ce que l'on raccorde à l'orifice (6b) pour la conduite de dégazage (8b) un tuyau d'évacuation pourvu d'une vanne de dégazage pouvant être commandée.

4. Joint d'étanchéité à manchon selon l'une des revendications 1 à 3, caractérisé en ce que la section transversale tout entière des orifices (10), qui sont prévus sur le pourtour extérieur de la cavité (5), en forme de tuyau, est plus petite que la section transversale de l'orifice qui sert au raccordement de la conduite d'amenée (8a) sur le pourtour intérieur (7) de l'autre bague d'étanchéité (1).

5. Joint d'étanchéité à manchon selon l'une des revendications 1 à 4, caractérisé en ce que les orifices (10) s'ouvrent sur le pourtour extérieur de la cavité (5), en forme de tuyau, en fonction d'une pression prédéfinie de remplissage de la cavité en forme de tuyau.

6. Joint d'étanchéité à manchon selon l'une des revendications 1 à 5, caractérisé en ce qu'au moins l'autre bague d'étanchéité (1), qui est disposée entre les faces frontales (26; 13) de l'extrémité du tube (16) et du manchon (12), est constituée par une nervure (4) de forme annulaire et qui pénètre dans un renfoncement (15) de forme annulaire, constitué pour cela de façon ajustée, de la face frontale voisine.
